# EUROPÄISCHE PATENTANMELDUNG

(11) **EP 4 749 580 A1**
(43) Veröffentlichungstag der Anmeldung: **27.05.2026**
(21) Anmeldenummer: 24214704.9
(22) Anmeldetag: 22.11.2024
(51) Int. Cl.: G06V 10/143, G06V 20/52

(54) **ÜBERWACHEN VON GLIEDERFÜSSERN**

(71) Anmelder: Bayer Aktiengesellschaft, 51373 Leverkusen (DE)
(72) Erfinder: TEMPEL, Matthias, 50935 Köln (DE); BORN, Fabian Christian, 57319 Bad Berleburg (DE)
(74) Vertreter: BIP Patents

(57) **Zusammenfassung**

Die vorliegende Offenbarung befasst sich mit dem Überwachen von Gliederfüßern auf Basis von Bildaufnahmen.

Gegenstände der vorliegenden Offenbarung sind ein Computer-implementiertes Verfahren, eine Vorrichtung und ein Computerprogramm.

## Beschreibung

### TECHNISCHES GEBIET

Die vorliegende Offenbarung befasst sich mit dem Überwachen von Gliederfüßern auf Basis von Bildaufnahmen.

Gegenstände der vorliegenden Offenbarung sind ein Computer-implementiertes Verfahren, eine Vorrichtung und ein Computerprogramm.

### EINLEITUNG

WO2020/058175A1 offenbart ein Verfahren, eine Vorrichtung und ein Computerprogramm zum Überwachen von Gliederfüßern. Die Vorrichtung umfasst eine Kamera, mit der eine Bildaufnahme eines Sammelbereichs, in dem sich ein oder mehrere Gliederfüßer aufhalten, erzeugt wird. Die Vorrichtung umfasst eine Sendeeinheit, mit der die Bildaufnahme über ein Netzwerk an ein Computersystem gesandt wird. Auf dem Computersystem kann die Bildaufnahme durch einen Nutzer und/oder automatisiert analysiert werden, z.B. um Gliederfüßer in der Bildaufnahme zu detektieren, zu identifizieren und/oder zu zählen.

In WO2020/058175A1 wird vorgeschlagen, den Sammelbereich mit einer Lichtquelle zu beleuchten, um eine definierte, vom Tageslicht unabhängige Beleuchtung des Sammelbereichs zu erzielen.

Es ist bekannt, dass das Erscheinungsbild von Gliederfüßern in Bildaufnahmen abhängig von der verwendeten elektromagnetischen Strahlung sein kann (siehe z.B. H. Knüttel, K. Fiedler: On the use of ultravioletphotography and ultraviolet wingpatterns in butterfly morphology and taxonomy, Journal of the Lepidopterists' Society, 54(4), 2000, 137- 144).

### ZUSAMMENFASSUNG

Diesen und weiteren Aspekten widmet sich die vorliegende Offenbarung.

Ein erster Gegenstand der vorliegenden Offenbarung ist ein Computer-implementiertes Verfahren umfassend:
- Bereitstellen einer ersten Bildaufnahme, wobei die erste Bildaufnahme einen Sammelbereich umfassend einen oder mehrere Gliederfüßer unter Bestrahlung mit elektromagnetischer Strahlung einer ersten Art repräsentiert,
- Bereitstellen einer zweiten Bildaufnahme, wobei die zweite Bildaufnahme den Sammelbereich umfassend den einen oder die mehreren Gliederfüßer unter Bestrahlung mit elektromagnetischer Strahlung einer zweiten Art repräsentiert, wobei die zweite Art verschieden von der ersten Art ist,
- Identifizieren des einen oder der mehreren Gliederfüßer auf Basis der ersten Bildaufnahme und der zweiten Bildaufnahme,
- Ausgeben einer Information über den einen oder die mehreren identifizierten Gliederfüßer.

Ein weiterer Gegenstand der vorliegenden Offenbarung ist eine Vorrichtung umfassend eine Verarbeitungseinheit und einen Speicher, wobei in dem Speicher ein Computerprogramm gespeichert ist, das die Vorrichtung veranlasst folgendes auszuführen:
- Bereitstellen einer ersten Bildaufnahme, wobei die erste Bildaufnahme einen Sammelbereich umfassend einen oder mehrere Gliederfüßer unter Bestrahlung mit elektromagnetischer Strahlung einer ersten Art repräsentiert,
- Bereitstellen einer zweiten Bildaufnahme, wobei die zweite Bildaufnahme den Sammelbereich umfassend den einen oder die mehreren Gliederfüßer unter Bestrahlung mit elektromagnetischer Strahlung einer zweiten Art repräsentiert, wobei die zweite Art verschieden von der ersten Art ist,
- Identifizieren des einen oder der mehreren Gliederfüßer auf Basis der ersten Bildaufnahme und der zweiten Bildaufnahme,
- Ausgeben einer Information über den einen oder die mehreren identifizierten Gliederfüßer.

Ein weiterer Gegenstand der vorliegenden Offenbarung ist ein nicht-flüchtiges computerlesbares Speichermedium, auf dem ein Computerprogramm gespeichert ist, das, wenn es von einer Verarbeitungseinheit eines Computersystems ausgeführt werden, das Computersystem veranlasst folgendes auszuführen:
- Bereitstellen einer ersten Bildaufnahme, wobei die erste Bildaufnahme einen Sammelbereich umfassend einen oder mehrere Gliederfüßer unter Bestrahlung mit elektromagnetischer Strahlung einer ersten Art repräsentiert,
- Bereitstellen einer zweiten Bildaufnahme, wobei die zweite Bildaufnahme den Sammelbereich umfassend den einen oder die mehreren Gliederfüßer unter Bestrahlung mit elektromagnetischer Strahlung einer zweiten Art repräsentiert, wobei die zweite Art verschieden von der ersten Art ist,
- Identifizieren des einen oder der mehreren Gliederfüßer auf Basis der ersten Bildaufnahme und der zweiten Bildaufnahme,
- Ausgeben einer Information über den einen oder die mehreren identifizierten Gliederfüßer.

### KURZE BESCHREIBUNG DER ZEICHNUNGEN

Fig. 1 zeigt eine Ausführungsform des Computer-implementierten Verfahrens der vorliegenden Offenbarung in Form eines Ablaufschemas.
Fig. 2 zeigt beispielhaft und schematisch eine Ausführungsform der Vorrichtung der vorliegenden Offenbarung.

### AUSFÜHRLICHE OFFENBARUNG

Die Gegenstände der vorliegenden Offenbarung werden im Folgenden näher erläutert, ohne zwischen den Gegenständen der vorliegenden Offenbarung (Verfahren, Vorrichtung, Computerprogramm) zu unterscheiden. Vielmehr sollen die nachfolgenden Ausführungen sinngemäß für alle Gegenstände der Erfindung gelten, unabhängig davon, in welchem Zusammenhang (Verfahren, Vorrichtung, Computerprogramm) sie beschrieben werden.

Wenn in der vorliegenden Beschreibung oder in den Ansprüchen Schritte in einer Reihenfolge angegeben sind, bedeutet dies nicht unbedingt, dass die Offenbarung auf die angegebene Reihenfolge beschränkt ist. Vielmehr ist es denkbar, dass die Schritte auch in einer anderen Reihenfolge oder auch parallel zueinander ausgeführt werden können, es sei denn, dass zum Beispiel ein Schritt auf einem anderen aufbaut, was erfordert, dass der aufbauende Schritt anschließend ausgeführt wird (dies wird aber im Einzelfall klar). Die angegeben Reihenfolgen sind somit beispielhafte Ausfiihrungsformen der vorliegenden Offenbarung.

Die Gegenstände der vorliegenden Offenbarung werden an einigen Stellen in Bezug auf Zeichnungen näher erläutert. Dabei sind in den Zeichnungen konkrete Ausfiihrungsformen mit konkreten Merkmalen und Merkmalskombinationen dargestellt, die in erster Linie der Veranschaulichung dienen; die vorliegende Offenbarung soll nicht so verstanden werden, dass sie auf die in den Zeichnungen dargestellten Merkmale und Merkmalskombinationen beschränkt ist. Ferner sollen Aussagen, die bei der Beschreibung der Zeichnungen in Bezug auf Merkmale und Merkmalskombinationen getroffen werden, allgemein gelten, das heißt auch auf andere Ausfiihrungsformen übertragbar und nicht auf die gezeigten Ausfiihrungsformen beschränkt sein.

Der Artikel "ein" bedeutet "ein oder mehrere"; es sei denn es steht ein "nur" oder "leidglich" davor. Dies gilt analog auch für den Artikel "eine".

Die Ausdrücke "basierend auf" und "auf Basis von" bedeuten "zumindest teilweise basierend auf', sofern nicht ausdrücklich etwas anderes angegeben ist.

Der Begriff "oder" ist nicht als exklusives "oder" zu verstehen, d.h. der Ausdruck "A oder B" umfasst "A", "B" sowie "A und B".

Die vorliegende Offenbarung stellt Mittel zum Identifizieren eines oder mehrerer Gliederfüßer bereit.

"Gliederfüßer" (Arthropoden) sind eine vielfältige Gruppe wirbelloser Tiere, die zum Stamm der Arthropoda gehören.

Gliederfüßer spielen in Ökosystemen eine wichtige Rolle als Bestäuber, Zersetzer und/oder als Teil des Nahrungsnetzes. Sie können auch von wirtschaftlicher Bedeutung sein, sowohl zum Nutzen (z.B. Bestäubung, Seidenproduktion) als auch zum Nachteil (z.B. als Schädlinge in der Landwirtschaft, Überträger von Krankheiten).

Gliederfüßer werden in mehrere Gruppen (Subphyla und Klassen) eingeteilt, darunter Insekten und Spinnentiere.

In einer Ausführungsform der vorliegenden Offenlegung bezieht sich der Begriff "Gliederfüßer" ausschließlich auf Insekten und Spinnentiere.

In einer anderen Ausführungsform der vorliegenden Offenbarung bezieht sich der Begriff "Gliederfüßer" ausschließlich auf Insekten.

In einer anderen Ausführungsform der vorliegenden Offenbarung bezieht sich der Begriff "Gliederfüßer" ausschließlich auf erwachsene Insekten.

In einer anderen Ausführungsform der vorliegenden Offenbarung bezieht sich der Begriff "Gliederfüßer" ausschließlich auf Insekten in Form von Raupen.

In einer anderen Ausführungsform der vorliegenden Offenbarung bezieht sich der Begriff "Gliederfüßer" ausschließlich auf Spinnentiere.

In einer anderen Ausführungsform der vorliegenden Offenbarung bezieht sich der Begriff "Gliederfüßer" ausschließlich auf Milben.

Unter dem Begriff "Identifizieren eines Gliederfüßers" wird ein Prozess verstanden, der klärt, um welchen Gliederfüßer (z.B. Unterklasse, Überordnung, Ordnung, Unterordnung, Familie, Gattung, Art, Stadium, Nützling, Schädling) es sich handelt. Ein Identifizieren eines Gliederfüßers kann also eine Zuordnung des Gliederfüßers zu einer Unterklasse, Überordnung, Ordnung, Unterordnung, Familie, Gattung und/oder Art im Sinne der biologischen Taxonomie bedeuten und/oder umfassen. Ein Identifizieren eines Gliederfüßers kann auch eine Zuordnung des Gliederfüßers zu einer der Klassen Nützling oder Schädling bedeuten und/oder umfassen. Ein Identifizieren eines Gliederfüßers kann auch eine Zuordnung des Gliederfüßers zu einem Stadium bedeuten und/oder umfassen.

Das Identifizieren des Gliederfüßers erfolgt auf Basis einer ersten Bildaufnahme und einer zweiten Bildaufnahme. Das Identifizieren des Gliederfußers kann auf Basis weiterer Bildaufnahmen erfolgen.

Eine "Bildaufnahme" ist eine üblicherweise visuelle Repräsentation einer Szene und/oder eines oder mehrerer Objekte, die üblicherweise durch Wechselwirkung von elektromagnetischer Strahlung mit lichtempfindlichen Substanzen oder Sensoren erfasst oder erzeugt wird. Der Begriff "Bildaufnahme" umfasst eine breite Palette von Formaten, einschließlich, aber nicht beschränkt auf digitale Fotos, Videos und Wärmebilder.

Üblicherweise handelt es sich bei der Bildaufnahme um eine digitale Bildaufnahme. Der Begriff "digital" bedeutet, dass die Bildaufnahme von einer Maschine, in der Regel einem Computersystem, verarbeitet werden kann. Unter "Verarbeitung" werden die bekannten Verfahren zur elektronischen Datenverarbeitung (EDV) verstanden.

Digitale Bildaufnahmen können mit Computersystemen und Computerprogrammen verarbeitet, bearbeitet und reproduziert sowie in standardisierte Datenformate konvertiert werden, wie zum Beispiel JPEG (Grafikformat der Joint Photographic Experts Group), PNG (Portable Network Graphics) oder SVG (Scalable Vector Graphics). Digitale Bildaufnahmen können mit geeigneten Anzeigegeräten visualisiert werden, wie zum Beispiel mit Computermonitoren, Projektoren und/oder Druckern.

In einer digitalen Bildaufnahme werden Bildinhalte üblicherweise durch ganze Zahlen repräsentiert und gespeichert. In den meisten Fällen handelt es sich um zweidimensionale Bilder, die binär kodiert und gegebenenfalls komprimiert sein können. Bei den digitalen Bildaufnahmen handelt es sich üblicherweise um Rastergrafiken, bei denen die Bildinformation in einer gleichmäßigen Rasterung abgelegt ist. Rastergrafiken bestehen aus einer rasterförmigen Anordnung von so genannten Bildelementen, z.B. Bildpunkten (Pixel) im Fall von zweidimensionalen Darstellungen oder Volumenelementen (Voxel) im Fall dreidimensionaler Darstellungen, denen jeweils eine Farbe bzw. ein Grauwert zugeordnet ist. Die Hauptmerkmale einer 2D-Rastergrafik sind daher die Bildgröße (Breite und Höhe gemessen in Pixeln, umgangssprachlich auch Bildauflösung genannt) sowie die Farbtiefe. Einem Bildelement einer digitalen Bildaufnahme ist üblicherweise eine Farbe oder ein Grauwert zugeordnet. Die für ein Bildelement verwendete Kodierung der Farbe definiert sich unter anderem über den Farbraum und die Farbtiefe. Der einfachste Fall ist ein Binärbild, bei dem ein Bildelement einen Schwarzweiß-Wert speichert. Bei einer Bildaufnahme, dessen Farbe über den so genannten RGB-Farbraum definiert ist (RGB steht für die Grundfarben Rot, Grün und Blau), umfasst jedes Bildelement drei Farbwerten, einen Farbwert für die Farbe Rot, einen Farbwert für die Farbe Grün und einen Farbwert für die Farbe Blau. Die Farbe eines Bildelements ergibt sich z.B. durch die Überlagerung (additives Mischen) der drei Farbwerte. Der einzelne Farbwert ist z.B. in 256 unterscheidbare Stufen diskretisiert, die Tonwerte genannt werden und üblicherweise von 0 bis 255 reichen. Die Farbnuance "0" eines jeden Farbkanals ist die dunkelste. Haben alle drei Kanäle den Tonwert 0, erscheint das entsprechende Bildelement schwarz; haben alle drei Kanäle den Tonwert 255, erscheint das entsprechende Bildelement weiß. Vereinfachend wird in dieser Beschreibung davon ausgegangen, dass die vorliegenden Bildaufnahmen RGB-Rastergrafiken mit einer spezifischen Zahl an Bildelementen sind. Diese Annahme soll jedoch in keiner Weise limitierend verstanden werden. Dem Fachmann der Bildbearbeitung ist klar, wie er die Lehre dieser Beschreibung auf Bildaufnahmen, die in anderen Bildformaten vorliegen und/oder bei denen die Farbwerte anders kodiert sind, übertragen kann.

Bei der ersten und/oder zweiten Bildaufnahme kann es sich auch um einen oder mehrere Ausschnitte aus einer Videosequenz handeln.

Die erste und/oder zweite Bildaufnahme wird üblicherweise mit Hilfe einer Kamera oder mehreren Kameras erzeugt.

Eine "Kamera" ist ein Gerät oder System, das dazu bestimmt ist, Bildaufnahmen von externen Objekten und Phänomenen zu erfassen und aufzuzeichnen. Eine Kamera nutzt dazu beispielsweise elektromagnetische Strahlung, Schallwellen oder andere physikalische Vorgänge, die visuell dargestellt werden können. Die Kamera wandelt empfangene Signale (z.B. optische oder akustische) in andere Signale (z.B. elektrische) und/oder Daten um, die gespeichert, verarbeitet, angezeigt und/oder übertragen werden können. Der Begriff "Kamera" umfasst Geräte, die mit allen Medien oder Technologien arbeiten, einschließlich analoger und digitaler, optischer, elektronischer, chemischer oder anderer Methoden der Bilderfassung. Der Begriff "Kamera" umfasst ein breites Spektrum von Geräten einschließlich, aber nicht beschränkt auf Fotokameras, Videokameras, Wärmebildkameras, Radarsysteme, Ultraschall-Bildgebungsgeräte, Elektronenmikroskope und alle künftigen Technologien, die die Funktion der Bilderfassung erfüllen können.

In einer Ausführungsform der vorliegenden Offenbarung ist die Kamera eine Digitalkamera, die mit Hilfe eines oder mehrerer Bildsensoren (Kamerasensoren) zweidimensionale Abbilder aus Licht auf elektrischem Weg erzeugt. Üblicherweise handelt es sich um halbleiterbasierte Bildsensoren wie beispielsweise CCD- (CCD = *charge-coupled device*) oder CMOS-Sensoren (CMOS = *complementary metal-oxide-semiconductor*)*.* Optische Elemente wie Linsen, Blenden und dergleichen dienen einer möglichst scharfen Abbildung von Gliederfüßern im Sammelbereich auf dem Bildsensor. Eine Digitalkamera ist konfiguriert, digitale Bildaufnahmen zu erzeugen.

In einem ersten Schritt wird die erste Bildaufnahme bereitgestellt.

Der Begriff "Bereitstellen einer Bildaufnahme" kann beispielsweise "Erzeugen der Bildaufnahme" und/oder "Empfangen der Bildaufnahme" bedeuten und/oder umfassen.

Der Begriff "Erzeugen einer Bildaufnahme" kann bedeuten, dass die Bildaufnahme von einer oder mehreren Kameras erzeugt wird. Eine solche Kamera kann ein Bestandteil der Vorrichtung der vorliegenden Offenbarung sein.

Der Begriff "Empfangen einer Bildaufnahme" kann bedeuten, dass die Bildaufnahme von einer Kamera oder einem separaten Computersystem übermittelt wird. Der Begriff "Empfangen einer Bildaufnahme" kann bedeuten, dass die Bildaufnahme von einer Kamera oder einem separaten Computersystem abgerufen wird. Der Begriff "Empfangen einer Bildaufnahme" kann bedeuten, dass die Bildaufnahme aus einem Datenspeicher ausgelesen wird. Der Begriff "Empfangen einer Bildaufnahme" kann bedeuten, dass die Bildaufnahme von einem Nutzer in die Vorrichtung der vorliegenden Offenbarung eingegeben wird.

Die erste Bildaufnahme repräsentiert einen Sammelbereich umfassend einen oder mehrere Gliederfüßer.

Der Sammelbereich ist ein Bereich, der von Gliederfüßern aufgesucht werden kann. Es kann sich dabei um eine ebene Oberfläche einer Tafel oder Karte oder dergleichen handeln. Es kann sich um den Boden eines Behälters handeln. Es kann sich um eine Flüssigkeit in einem Behälter handeln. Es kann sich um einen Teil einer Pflanze handeln, beispielsweise ein Blatt oder eine Frucht oder ein anderer Teil einer Pflanze.

In einer Ausführungsform der vorliegenden Offenbarung ist der Sammelbereich ein Teil einer Fangvorrichtung für Gliederfüßer. In einer Ausführungsform der vorliegenden Offenbarung ist die Vorrichtung der vorliegenden Offenbarung eine solche Fangvorrichtung oder ein Bestandteil davon oder die Vorrichtung der vorliegenden Offenbarung umfasst eine solche Fangvorrichtung.

In einer Ausführungsform der vorliegenden Offenbarung umfasst die Fangvorrichtung einen mit einer Flüssigkeit gefüllten Behälter, z.B. eine Fangschale, wie sie in WO2020/058175A1, WO2020/058170A1, WO2021/213824A1 oder WO2022/243150A1 beschrieben ist.

In einer Ausführungsform der vorliegenden Offenbarung umfasst die Fangvorrichtung eine mit einem Klebemittel versehene Oberfläche, wie sie in beispielsweise in WO2023/043871A1, WO2018/131853A1 oder WO2004/095919A2 beschrieben ist.

In einer Ausführungsform der vorliegenden Offenbarung umfasst die Fangvorrichtung einen zeltartigen Rahmen, der einen Innenraum definiert, in den Gliederfüßer gelangen können. Solche Fangvorrichtungen sind auch unter der Bezeichnung Delta-Falle bekannt (siehe z.B. WO2018/078638A1); sie können jedoch andere Formen als die Form eines Prismas aufweisen.

Als Lockmittel kann der Sammelbereich in einer Farbe gestaltet sein (z.B. gelb oder rot), die spezifische Gliederfüßer anlockt. Neben oder anstelle einer Farbe können weitere/andere Mittel vorhanden sein, die Gliederfüßer anlocken (Lockmittel). Denkbar ist zum Beispiel die Verwendung eines Pheromons oder eines Duftstoffes, der z.B. eine Nahrungsquelle vortäuscht. Auch der Einsatz einer Quelle für elektromagnetische Strahlung im infraroten, sichtbaren und/oder ultravioletten Bereich zum Anlocken von (spezifischen) Gliederfüßern ist denkbar. Auch der Einsatz von Geräuschen, die beispielsweise paarungswillige Männchen und/oder Weibchen imitieren, ist denkbar. Auch der Einsatz von speziellen Mustern, die zum Beispiel eine Pflanze imitieren, ist denkbar.

Im Falle der Verwendung eines mit einer Flüssigkeit gefüllten Behälters kann dieser mit Wasser und optional mit einem oder mehreren Zusätzen gefüllt sein. Ein solcher Zusatz kann beispielsweise ein Tensid zur Erniedrigung der Oberflächenspannung sein. Ein solcher Zusatz kann auch ein Lockstoff zum Anlocken von (spezifischen) Gliederfüßern sein. Ein solcher Zusatz kann auch ein Mittel zur Verhinderung von Algenbildung (beispielsweise ein Herbizid) sein.

Im Falle einer Karte oder Tafel kann diese mit einem Klebstoff (Klebemittel) versehen sein, um Gliederfüßer bewegungsunfähig zu machen.

Die erste Bildaufnahme repräsentiert einen Sammelbereich umfassend einen oder mehrere Gliederfüßer unter Bestrahlung mit elektromagnetischer Strahlung einer ersten Art.

Die erste Art kann beispielsweise einen ersten Spektralbereich spezifizieren. Mit anderen Worten: die erste Bildaufnahme kann den Sammelbereich unter Bestrahlung mit elektromagnetischer Strahlung eines ersten Spektralbereichs repräsentieren.

Der Spektralbereich spezifiziert die Wellenlänge(n) oder die Frequenz(en) der elektromagnetischen Strahlung.

Der erste Spektralbereich umfasst üblicherweise mindestens eine Wellenlänge im Bereich von 200 nm bis 50 µm. Der erste Spektralbereich kann mehrere Wellenlängen umfassen. Für den Fall, dass der Spektralbereich mehrere Wellenlängen umfasst, können die elektromagnetischen Strahlen der entsprechenden Wellenlängen die gleiche Intensität oder verschiedene Intensitäten haben.

Der erste Spektralbereich kann eine Mehrzahl von Wellenlängen aufweisen, die zusammengenommen ein Kontinuum oder mehrere Kontinuen bilden. Der erste Spektralbereich kann eine Mehrzahl von Wellenlängen umfassen, die durch andere Wellenlängen, die nicht in dem ersten Spektralbereich vertreten sind, getrennt sind. Mischformen sind ebenfalls möglich.

In einer Ausführungsform umfasst der erste Spektralbereich eine Mehrzahl von Wellenlängen im sichtbaren Spektralbereich (380 nm bis 780 nm).

Die Bestrahlung des Sammelbereichs mit elektromagnetischer Strahlung des ersten Spektralbereichs kann beispielsweise mit einer oder mehreren Beleuchtungseinheiten (d.h. Quellen für elektromagnetische Strahlung) erfolgen. Eine solche Beleuchtungseinheit kann ein Bestandteil der Vorrichtung der vorliegenden Offenbarung sein.

In einer Ausführungsform ist oder umfasst eine solche Beleuchtungseinheit eine lichtemittierende Diode, auch als Leuchtdiode bezeichnet.

In einer Ausführungsform ist eine solche LED eine Blitz-LED. Eine Blitz-LED ist eine Leuchtdiode, die einen kurzen Lichtimpuls zur Beleuchtung von Motiven beim Erzeugen einer Bildaufnahme erzeugt.

In einer Ausführungsform der vorliegenden Offenbarung erzeugt mindestens eine Beleuchtungseinheit weißes Licht. "Weißes Licht" ist elektromagnetische Strahlung, die vom menschlichen Auge als weiß wahrgenommen wird. Diese Wahrnehmung entsteht dadurch, dass die elektromagnetische Strahlung eine Mischung verschiedener Wellenlängen enthält. Wenn diese verschiedenen Wellenlängen in einer definierten Kombination in das Auge eintreten, stimulieren sie die Netzhaut auf eine Weise, die die Wahrnehmung der weißen Farbe erzeugt. Weißes Licht kann durch eine Mischung aus allen Farben des Regenbogens, zu denen Rot, Orange, Gelb, Grün, Blau, Indigo und Violett gehören, erzeugt werden. Der Begriff "weißes Licht" soll auch die Begriffe "warmweißes Licht", "kaltweißes Licht" und "Tageslicht" umfassen.

Die Eigenschaften von weißem Licht können variieren, insbesondere in Bezug auf die Farbtemperatur, was zu verschiedenen Arten von weißem Licht führt. Warmweißes Licht hat eine Farbtemperatur im Bereich von 2700 K bis 3000 K. Kaltweißes Licht hat eine Farbtemperatur im Bereich von 3000 K bis 4500 K liegt. Tageslicht hat eine Farbtemperatur über 4500 K.

Die Bestrahlung des Sammelbereichs mit elektromagnetischer Strahlung des ersten Spektralbereichs kann auch mittels gestreuten Sonnenlichts erfolgen.

Die Art der elektromagnetischen Strahlung kann anstelle von oder in Ergänzung zum Spektralbereich eine Polarisation spezifizieren. Es ist zum Beispiel möglich, dass die erste Bildaufnahme den Sammelbereich unter Bestrahlung elektromagnetischer Strahlung einer ersten Polarisation repräsentiert. Die Polarisation kann angeben, wie die elektromagnetische Strahlung polarisiert ist. Die elektromagnetische Strahlung kann beispielsweise linear polarisiert sein oder zirkular polarisiert sein. Die Polarisation kann im Fall einer linearen Polarisation die Polarisationsrichtung angeben. Die Polarisation kann im Fall einer zirkularen Polarisation die Drehrichtung angeben.

Die Polarisation der elektromagnetischen Strahlung kann beispielsweise mittels eines oder mehrerer Polarisationsfilter bewirkt werden. Es ist möglich, dass zwischen der Quelle für elektromagnetische Strahlung und dem Sammelbereich ein Polarisationsfilter angebracht ist, der dafür sorgt, dass nur elektromagnetische Strahlung mit einer definierten Polarisation den Sammelbereich erreicht. Es ist möglich, dass zwischen dem Sammelbereich und dem Kamerasensor ein Polarisationsfilter angebracht ist, der dafür sorgt, dass nur elektromagnetische Strahlung einer definierten Polarisation den Kamerasensor erreicht. Es ist möglich, dass sowohl zwischen der Quelle für elektromagnetische Strahlung und dem Sammelbereich als auch zwischen dem Sammelbereich und dem Kamerasensor ein Polarisationsfilter angebracht ist. Es ist zum Beispiel möglich, dass es sich bei den beiden Polarisationsfiltern um gekreuzte Polarisationsfilter (z.B. um 90° gedrehte lineare Polarisationsfilter) handelt.

Die Art kann anstelle von oder in Ergänzung zum Spektralbereich und/oder zur Polarisation eine (z.B. Wellenlängen-abhängige) Intensitätsverteilung spezifizieren.

In einem weiteren Schritt wird eine zweite Bildaufnahme bereitgestellt.

Die zweite Bildaufnahme repräsentiert denselben Sammelbereich wie die erste Bildaufnahme oder zumindest einen Teil davon. Der in der zweiten Bildaufnahme abgebildete Sammelbereich (oder der Teil davon) umfasst denselben oder dieselben Gliederfüßer wie der in der ersten Bildaufnahme abgebildete Sammelbereich. Üblicherweise wurde die zweite Bildaufnahme in einem zeitlichen Abstand zur ersten Bildaufnahme erzeugt, der beispielsweis weniger als eine Minute oder weniger als 20 Sekunden oder weniger als 10 Sekunden oder weniger als 5 Sekunden oder weniger als 3 Sekunden oder weniger als 2 Sekunden oder weniger als 1 Sekunde beträgt.

Die zweite Bildaufnahme kann zeitlich vor der ersten Bildaufnahme oder zeitlich nach der ersten Bildaufnahme erzeugt worden sein.

Es ist auch möglich, dass die erste Bildaufnahme und die zweite Bildaufnahme zur selben Zeit (zeitgleich) erzeugt wurden.

Die erste Bildaufnahme und die zweite Bildaufnahme können mittels derselben Kamera oder mittels denselben Kameras erzeugt worden sein; die erste Bildaufnahme und die zweite Bildaufnahme können mittels verschiedener Kameras erzeugt worden sein.

Die zweite Bildaufnahme repräsentiert den Sammelbereich umfassend den einen oder die mehreren Gliederfüßer unter Bestrahlung mit elektromagnetischer Strahlung einer zweiten Art. Die zweite Art ist verschieden von der ersten Art.

Die zweite Bildaufnahme kann den Sammelbereich beispielsweise unter Bestrahlung mit elektromagnetischer Strahlung eines zweiten Spektralbereichs repräsentieren.

Der zweite Spektralbereich ist üblicherweise verschieden von dem ersten Spektralbereich. Der zweite Spektralbereich kann, wie der erste Spektralbereich eine oder mehrere Wellenlängen und/oder einen oder mehrere Wellenlängenbereiche umfassen.

Der zweite Spektralbereich kann mehr oder weniger Wellenlängen und/oder andere Wellenlängen als der erste Spektralbereich umfassen.

Der zweite Spektralbereich kann ein Teil des ersten Spektralbereich sein oder einen Teil des ersten Spektralbereichs umfassen. Der erste Spektralbereich kann ein Teil des zweiten Spektralbereich sein oder einen Teil des zweiten Spektralbereichs umfassen.

Der zweite Spektralbereich kann so gestaltet sein, dass er eine oder mehrere Wellenlängen mit dem ersten Spektralbereich gemeinsam hat; der zweite Spektralbereich kann so gestaltet sein, dass alle seine Wellenlängen verschieden von der Wellenlänge oder den Wellenlängen des ersten Spektralbereichs sind.

In einer Ausführungsform repräsentieren der erste und der zweite Spektralbereich verschiedene Bereiche im elektromagnetischen Spektrum. Ein Spektralbereich (z.B. der erste Spektralbereich) kann beispielsweise den Bereich des sichtbaren Lichts oder einen Teil davon repräsentieren, während der andere Spektralbereich (z.B. der zweite Spektralbereich) den Bereich des ultravioletten Lichts oder einen Teil davon oder den Bereich des infraroten Lichts oder einen Teil davon repräsentiert.

Unter ultraviolettem Licht kann beispielsweise der Bereich von 280 nm bis 380 nm oder der Bereich von 280 nm bis 315 nm oder der Bereich von 315 nm bis 380 nm verstanden werden.

Unter infrarotem Licht kann beispielsweise der Bereich von 780 nm bis 50 µm oder der Bereich von 780 nm bis 3 µm oder der Bereich von 3 µm bis50 µm verstanden werden.

Wie im Fall der ersten Bildaufnahme kann das Erscheinungsbild des Sammelbereichs auch in der zweiten Bildaufnahme durch Bestrahlen mit elektromagnetischer Strahlung des entsprechenden Spektralbereichs erzeugt werden. Es kann also eine Quelle für elektromagnetische Strahlung vorhanden sein, die elektromagnetische Strahlung des zweiten Spektralbereichs erzeugt und auf den Sammelbereich sendet.

Ebenso ist es möglich, dass ein oder mehrere Filter verwendet werden, die aus der von dem Sammelbereich reflektierten, gestreuten und/oder gebeugten elektromagnetischen Strahlung ein oder mehrere Wellenlängen herausfiltern, bevor die elektromagnetische Strahlung auf einen Kamerasensor oder mehrere Kamerasensoren trifft. Bei einem solchen Filter kann es sich um einen Absorptionsfilter handeln, der elektromagnetische Strahlung einer definierten Wellenlänge oder eines definierten Wellenlängenbereichs ganz oder teilweise absorbiert. Dies gilt sowohl für die erste Bildaufnahme als auch für die zweite Bildaufnahme.

Die zweite Bildaufnahme repräsentiert den Sammelbereich umfassend den einen oder die mehreren Gliederfüßer unter Bestrahlung mit elektromagnetischer Strahlung einer zweiten Art.

Die zweite Art kann anstelle eines zweiten Spektralbereichs oder in Ergänzung zu einem zweiten Spektralbereich auch eine Polarisation betreffen. Mit anderen Worten: die erste Bildaufnahme kann den Sammelbereich unter Bestrahlung mit elektromagnetischer Strahlung einer ersten Polarisation repräsentieren und die zweite Bildaufnahme kann den Sammelbereich unter Bestrahlung mit elektromagnetischer Strahlung einer zweiten Polarisation repräsentieren, wobei die zweite Polarisation verschieden von der ersten Polarisation sein kann. Dabei kann eine der Bildaufnahmen (z.B. die erste Bildaufnahme) den Sammelbereich unter Bestrahlung mit nicht-polarisierter elektromagnetischer Strahlung repräsentieren, während die andere Bildaufnahme (z.B. die zweite Bildaufnahme) den Sammelbereich unter Bestrahlung mit polarisierter elektromagnetischer Strahlung repräsentiert.

Die zweite Art kann anstelle eines zweiten Spektralbereichs oder in Ergänzung zu einem zweiten Spektralbereich und/oder einer zweiten Polarisation auch eine zweite (z.B. Wellenlängen-abhängige) Intensitätsverteilung der elektromagnetischen Strahlung betreffen.

In einem weiteren Schritt wird auf Basis der ersten Bildaufnahme und der zweiten Bildaufnahme eine Identifizierung des einen oder der mehreren in dem Sammelbereich vorhandenen Gliederfüßer vorgenommen.

Hierfür gibt es mehrere Möglichkeiten.

In einer Ausführungsform der vorliegenden Offenbarung wird ein trainiertes Modell des maschinellen Lernens verwendet, um den einen oder die mehreren Gliederfüßer zu identifizieren.

Ein solches "Modell des maschinellen Lernens" kann als eine computerimplementierte Datenverarbeitungsarchitektur verstanden werden. Das Modell kann Eingabedaten empfangen und Ausgabedaten auf der Grundlage dieser Eingabedaten und Modellparametern liefern. Das Modell kann durch Training eine Beziehung zwischen den Eingabedaten und den Ausgabedaten erlernen. Beim Training können Modellparameter angepasst werden, um eine gewünschte Ausgabe für eine bestimmte Eingabe zu liefern.

Beim Trainieren eines solchen Modells werden dem Modell Trainingsdaten präsentiert, aus denen es lernen kann. Das trainierte Modell des maschinellen Lernens ist das Ergebnis des Trainingsprozesses. Die Trainingsdaten umfassen neben Eingabedaten die korrekten Ausgabedaten (Zieldaten), die das Modell auf Basis der Eingabedaten erzeugen soll. Beim Trainieren werden Muster erkannt, die die Eingabedaten auf die Zieldaten abbilden.

Im Trainingsprozess werden die Eingabedaten der Trainingsdaten in das Modell eingegeben, und das Modell erzeugt Ausgabedaten. Die Ausgabedaten werden mit den Zieldaten verglichen. Modellparameter werden so verändert, dass die Abweichungen zwischen den Ausgabedaten und den Zieldaten auf ein (definiertes) Minimum reduziert werden. Zur Modifizierung der Modellparameter im Hinblick auf eine Reduzierung der Abweichungen kann ein Optimierungsverfahren wie beispielsweise ein Gradientenverfahren verwendet werden.

Die Abweichungen können mit Hilfe einer Fehlerfunktion (engl.: *loss function*) quantifiziert werden. Eine solche Fehlerfunktion kann verwendet werden, um einen Fehler (engl.: *loss*) für ein gegebenes Paar von Ausgabedaten und Zieldaten zu berechnen. Das Ziel des Trainingsprozesses kann darin bestehen, die Parameter des Modells des maschinellen Lernens so zu verändern (anzupassen), dass der Fehler für alle Paare des Trainingsdatensatzes auf ein (definiertes) Minimum reduziert wird.

Handelt es sich bei den Ausgabedaten und den Zieldaten beispielsweise um Zahlen, kann die Fehlerfunktion die absolute Differenz zwischen diesen Zahlen sein. In diesem Fall kann ein hoher absoluter Fehler bedeuten, dass ein oder mehrere Modellparameter in hohem Maße geändert werden müssen.

Bei Ausgabedaten in Form von Vektoren können beispielsweise Differenzmetriken zwischen Vektoren wie der mittlere quadratische Fehler, ein Kosinusabstand, eine Norm des Differenzvektors wie ein euklidischer Abstand, ein Tschebyscheff-Abstand, eine Lp-Norm eines Differenzvektors, eine gewichtete Norm oder eine andere Art von Differenzmetrik zweier Vektoren als Fehlerfunktion gewählt werden.

Bei höherdimensionalen Ausgaben, wie z.B. zweidimensionalen, dreidimensionalen oder höherdimensionalen Ausgaben, kann z.B. eine elementweise Differenzmetrik verwendet werden. Alternativ oder zusätzlich können die Ausgabedaten vor der Berechnung eines Fehlerwertes transformiert werden, z.B. in einen eindimensionalen Vektor.

Das Training kann beendet werden, wenn ein Stopp-Kriterium erfüllt ist. Ein solches Stoppkriterium kann beispielsweise sein: eine vordefinierte maximale Anzahl von Trainingsschritten/-zyklen/-epochen wurde durchgeführt, Abweichungen zwischen Ausgabedaten und Zieldaten können nicht mehr durch Änderung der Modellparameter reduziert werden und/oder ein vorab festgelegtes Minimum der Fehlerfunktion wurde erreicht.

Ein Modell des maschinellen Lernens, das konfiguriert ist, Gliederfüßer in einer Bildaufnahme zu identifizieren, kann beispielsweise anhand einer Vielzahl an Referenz-Bildaufnahmen trainiert werden, in denen Sammelbereiche mit spezifischen Gliederfüßern abgebildet sind.

Der Begriff "Referenz-" wird in der vorliegenden Offenbarung verwendet, um Daten, die zum Trainieren eines Modells des maschinellen Lernens verwendet werden, von Daten, die bei der Verwendung des trainierten Modells des maschinellen Lernens zur Vorhersage verwendet werden, zu unterscheiden. Der Begriff "Referenz-" hat ansonsten keinerlei einschränkende Bedeutung. Eine Referenz-Bildaufnahme ist eine Bildaufnahme im Sinne der vorliegenden Offenbarung. Eine erste Referenz-Bildaufnahme hat die Eigenschaften einer ersten Bildaufnahme im Sinne der vorliegenden Offenbarung, d.h. sie repräsentiert einen Sammelbereich umfassend einen oder mehrere Gliederfüßer unter Bestrahlung mit elektromagnetischer Strahlung einer ersten Art. Eine zweite Referenz-Bildaufnahme hat die Eigenschaften einer zweiten Bildaufnahme im Sinne der vorliegenden Offenbarung, d.h. sie repräsentiert den Sammelbereich umfassend den oder die mehreren Gliederfüßer unter Bestrahlung mit elektromagnetischer Strahlung einer zweiten Art, wobei die zweite Art verschieden von der ersten Art ist.

Die Trainingsdaten umfassen neben den Referenz-Bildaufnahmen Informationen darüber, ob und/oder welche spezifischen Gliederfüßer in den jeweiligen Referenz-Bildaufnahmen abgebildet sind. Diese Informationen können beim Trainieren des Modells als Zieldaten verwendet werden. Die Referenz-Bildaufnahmen können dem Modell des maschinellen Lernens nacheinander zugeführt werden und das Modell kann für jede Referenz-Bildaufnahme eine Ausgabe erzeugen, die angibt, ob ein Gliederfüßer und/oder welcher spezifische Gliederfüßer in der Referenz-Bildaufnahme vorhanden ist. Die Ausgabe kann mit den Zieldaten verglichen werden. Abweichungen können durch Modifizieren von Modellparametern reduziert werden. Ist das Modell des maschinellen Lernens trainiert, kann dem Modell eine neue Bildaufnahme eines Sammelbereichs zugeführt werden. "Neu" bedeutet, dass diese Bildaufnahme üblicherweise nicht beim Trainieren des Modells des maschinellen Lernens verwendet wurde. Das trainierte Modell des maschinellen Lernens gibt dann eine Information aus, anhand derer ein Gliederfüßer in der neuen Bildaufnahme identifiziert werden kann.

T. Kasinathan *et al.* beschreiben ein Modell des maschinellen Lernens, das konfiguriert ist und anhand von Trainingsdaten trainiert wurde, auf Basis einer Bildaufnahme, die einen Gliederfüßer zeigt, diesen Gliederfüßer zu klassifizieren (T. Kasinathan et al.: Insect classification and detection in field crops using modern machine learning techniques, Information Processing in Agriculture, https://doi.org/10.1016/j.inpa.2020.09.006).

In dem von T. Kasinathan *et al.* beschriebenen Verfahren wird nur eine Bildaufnahme eines Gliederfüßers dem trainierten Modell des maschinellen Lernens zugeführt und das Modell klassifiziert die Bildaufnahme in eine von mehreren Klassen, wobei die Klasse angibt, welcher Gliederfüßer in der Bildaufnahme abgebildet ist.

Das Verwenden von zwei (oder mehr Bildaufnahmen), z.B. einer ersten Bildaufnahme und einer zweiten Bildaufnahmen, die sich in der Erscheinung des einen oder der mehreren Gliederfüßer in den Bildaufnahmen unterscheiden, hat den Vorteil, dass dem Modell mehr Daten zur Verfügung stehen, anhand derer es den einen oder die mehreren Gliederfüßer identifizieren kann.

Ein Modell des maschinellen Lernens zum Identifizieren eines (oder mehrerer) Gliederfüßer kann trainiert werden, indem dem Modell eine Vielzahl erster und zweiter Referenz-Bildaufnahmen zugeführt wird und das Modell eine Ausgabe erzeugt, die angibt, um welchen Gliederfüßer es sich jeweils handelt. Das Modell des maschinellen Lernens kann wie im Fall des von T. Kasinathan *et al.* offenbarten Modells ein Klassifikationsmodell sein. Das Modell kann beispielsweise eine Zahl ausgeben, die die jeweilige Klasse repräsentiert. Das Modell kann auch konfiguriert sein, einen Vektor auszugeben, wobei jedes Vektorelement eine Klasse repräsentiert, und der Wert des Vektorelements angibt, mit welcher Wahrscheinlichkeit es sich bei einem abgebildeten Gliederfüßer um einen Gliederfüßer der jeweiligen Klasse handelt. Weitere Möglichkeiten sind denkbar.

In einer weiteren Ausführungsform erfolgt das Identifizieren eines Gliederfüßers schrittweise.

In einem ersten Schritt kann die erste Bildaufnahme einem trainierten ersten Modell des maschinellen Lernens zugeführt werden. Das erste Modell des maschinellen Lernens kann konfiguriert sein, Gliederfüßer in der ersten Bildaufnahme zu erkennen. Dabei repräsentiert der Begriff "Erkennen eines Gliederfüßers" einen Vorgang, bei dem festgestellt wird, ob in der Bildaufnahme überhaupt ein Gliederfüßer abgebildet ist und/oder wo (an welcher Stelle in der Bildaufnahme) der Gliederfüßer abgebildet ist.

Für den Fall, dass das erste Modell des maschinellen Lernens einen Gliederfüßer in der ersten Bildaufnahme erkannt hat, kann die zweite Bildaufnahme und/oder ein Ausschnitt aus der zweiten Bildaufnahme umfassend den Gliederfüßer einem zweiten trainierten Modell des maschinellen Lernens zugeführt werden. Das zweite Modell des maschinellen Lernens kann konfiguriert sein, den Gliederfüßer zu identifizieren. Neben der zweiten Bildaufnahme und/oder dem Ausschnitt aus der zweiten Bildaufnahme kann dem zweiten Modell des maschinellen Lernens auch die erste Bildaufnahme und/oder ein Ausschnitt aus der ersten Bildaufnahme umfassend den Gliederfüßer zugeführt werden.

Ein Modell des maschinellen Lernens, das konfiguriert ist, Gliederfüßer in einer Bildaufnahme zu erkennen, kann beispielsweise anhand einer Vielzahl an Referenz-Bildaufnahmen trainiert werden, in denen Sammelbereiche mit und ohne Gliederfüßer abgebildet sind. Die Trainingsdaten umfassen neben den Referenz-Bildaufnahmen Informationen darüber, ob in den jeweiligen Referenz-Bildaufnahmen ein Gliederfüßer abgebildet ist oder nicht und/oder wo dieser Gliederfüßer ggf. abgebildet ist. Diese Informationen können beim Trainieren des Modells als Zieldaten verwendet werden. Die Referenz-Bildaufnahmen können dem Modell des maschinellen Lernens nacheinander zugeführt werden und das Modell kann für jede Bildaufnahme eine Ausgabe erzeugen, die angibt, ob in der Bildaufnahme ein Gliederfüßer vorhanden ist und/oder wo der Gliederfüßer ggf. abgebildet ist. Die Ausgabe kann mit den Zieldaten verglichen werden. Abweichungen können durch Modifizieren von Modellparametern reduziert werden.

In einer weiteren Ausführungsform kann das erste Modell des maschinellen Lernens konfiguriert sein, auf Basis der ersten Bildaufnahme ein zweites Modell des maschinellen Lernens auszuwählen. Das erste Modell des maschinellen Lernens kann konfiguriert sein, eine erste Identifizierung des Gliederfüßers vorzunehmen, die eine Zuordnung zu einer Klasse sein kann. Anhand dieser Zuordnung zu einer Klasse kann dann ein zweites Modell des maschinellen Lernens ausgewählt werden, dass auf Trainingsdaten betreffend diese Klasse trainiert wurde und konfiguriert ist, eine zweite Identifizierung, zum Beispiel eine Zuordnung des Gliederfüßers zu einer Unterklasse der Klasse vorzunehmen. Dem zweiten Modell des maschinellen Lernens kann die zweite Bildaufnahme zugeführt werden und/oder ein Ausschnitt aus der zweiten Bildaufnahme umfassend den Gliederfüßer. Es ist auch möglich, dass dem zweiten Modell des maschinellen Lernens zusätzlich die erste Bildaufnahme und/oder ein Ausschnitt aus der ersten Bildaufnahme umfassend den Gliederfüßer zugeführt wird.

In einer weiteren Ausführungsform wird die erste Bildaufnahme einem ersten Modell des maschinellen Lernens zugeführt. Die erste Bildaufnahme repräsentiert den Sammelbereich umfassend den Gliederfüßer unter Bestrahlung mit elektromagnetischer Strahlung einer ersten Art. Das erste Modell des maschinellen erzeugt eine Ausgabe auf Basis der ersten Bildaufnahme. Auf Basis der Ausgabe des ersten Modells des maschinellen Lernens kann die zweite Art der elektromagnetischen Strahlung ermittelt werden. Der Sammelbereich kann mit elektromagnetischer Strahlung der zweiten Art bestrahlt werden und es kann die zweite Bildaufnahme erzeugt werden, die den Sammelbereich umfassend den Gliederfüßer unter Bestrahlung mit elektromagnetischer Strahlung der zweiten Art repräsentiert.

Die zweite Bildaufnahme und/oder ein Ausschnitt der zweiten Bildaufnahme umfassend den Gliederfüßer kann einem zweiten Modell des maschinellen Lernens zugeführt werden, das dann den Gliederfüßer identifiziert. Neben der zweiten Bildaufnahme und/oder dem Ausschnitt aus der zweiten Bildaufnahme kann dem zweiten Modell des maschinellen Lernens auch die erste Bildaufnahme und/oder ein Ausschnitt aus der ersten Bildaufnahme umfassend den Gliederfüßer zugeführt werden. In der beschriebenen Ausführungsform kann das erste Modell des maschinellen Lernens den Gliederfüßer anhand der ersten Bildaufnahme einer ersten Klasse zuordnen. Die erste Klasse kann grob angeben, um welchen Gliederfüßer es sich handelt. Anhand der Zuordnung zu der ersten Klasse können diejenigen Beleuchtungsparameter ermittelt werden, die den Gliederfüßer in der zweiten Bildaufnahme so erscheinen lassen, dass eine weitere, feinere Klassifizierung möglich ist. Das zweite Modell des maschinellen Lernens kann den in der zweiten Bildaufnahme abgebildeten Gliederfüßer einer Unterklasse der ersten Klasse zuordnen. Ebenso ist es möglich, dass das erste Modell des maschinellen Lernens konfiguriert ist, auf Basis der ersten Bildaufnahme Parameter auszugeben, die die zweite Art der elektromagnetischen Strahlung festlegt.

Kombinationen der hier beschriebenen Ausführungsformen sind ebenfalls möglich.

Das Ergebnis der Identifizierung kann ausgegeben, d.h. z.B. auf einem Monitor angezeigt, auf einem Drucker ausgegeben, in einem Datenspeicher gespeichert und/oder an ein separates Computersystem übermittelt werden.

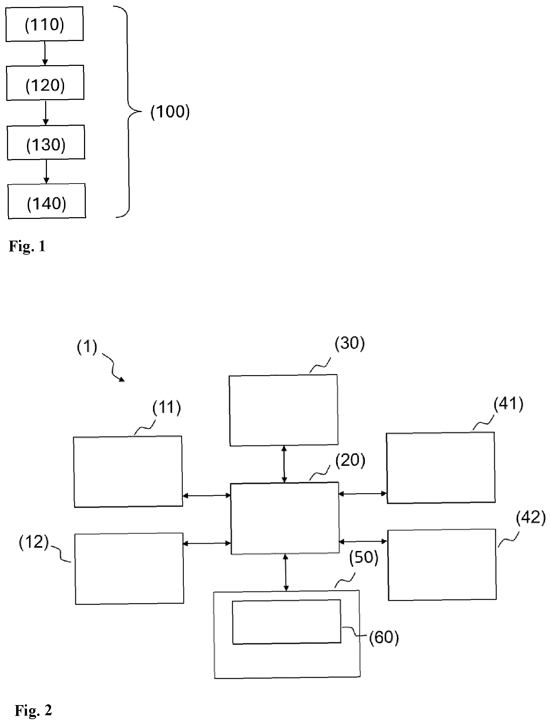

Fig. 1 zeigt beispielhaft und schematisch eine Ausführungsform des computer-implementierten Verfahrens der vorliegenden Offenbarung in Form eines Ablaufschemas.

Das Verfahren (100) umfasst die Schritte:

| | |
|---|---|
| (110) | Bereitstellen einer ersten Bildaufnahme, wobei die erste Bildaufnahme einen Sammelbereich umfassend einen oder mehrere Gliederfüßer unter Bestrahlung mit elektromagnetischer Strahlung einer ersten Art repräsentiert, |
| (120) | Bereitstellen einer zweiten Bildaufnahme, wobei die zweite Bildaufnahme den Sammelbereich umfassend den einen oder die mehreren Gliederfüßer unter Bestrahlung mit elektromagnetischer Strahlung einer zweiten Art repräsentiert, wobei die zweite Art verschieden von der ersten Art ist, |
| (130) | Identifizieren des einen oder der mehreren Gliederfüßer auf Basis der ersten Bildaufnahme und der zweiten Bildaufnahme, |
| (140) | Ausgeben einer Information über den einen oder die mehreren identifizierten Gliederfüßer. |

Ein weiterer Gegenstand der vorliegenden Erfindung ist eine Vorrichtung. Fig. 2 zeigt beispielhaft und schematisch eine Ausführungsform einer solchen Vorrichtung.

Die Vorrichtung (1) umfasst eine Verarbeitungseinheit (20) (engl. *processing unit*) und einen Speicher (50).

Die Verarbeitungseinheit (20) kann einen oder mehrere Prozessoren allein oder in Kombination mit einem oder mehreren Speichern umfassen. Bei der Verarbeitungseinheit (20) kann es sich um gewöhnliche Computerhardware handeln, die in der Lage ist, Informationen wie z.B. digitale Bildaufnahmen, Computerprogramme und/oder andere digitale Informationen zu verarbeiten. Die Verarbeitungseinheit (20) besteht üblicherweise aus einer Anordnung elektronischer Schaltungen, von denen einige als integrierter Schaltkreis oder als mehrere miteinander verbundene integrierte Schaltkreise (ein integrierter Schaltkreis wird manchmal auch als "Chip" bezeichnet) ausgeführt sein können. Die Verarbeitungseinheit (20) kann konfiguriert sein, Computerprogramme auszuführen, die im Speicher (50) gespeichert sein können.

Der Speicher (50) kann eine gewöhnliche Computerhardware sein, die in der Lage ist, Informationen wie z.B. digitale Bildaufnahmen (z.B. Repräsentationen des Untersuchungsbereichs), Daten, Computerprogramme und/oder andere digitale Informationen entweder vorübergehend und/oder dauerhaft zu speichern. Der Speicher (50) kann einen flüchtigen und/oder nichtflüchtigen Speicher umfassen und kann fest eingebaut oder entfernbar sein. Beispiele für geeignete Speicher sind RAM (Random Access Memory), ROM (Read-Only Memory), eine Festplatte, ein Flash-Speicher oder eine Kombination der oben genannten.

Zusätzlich zum Speicher (50) kann die Verarbeitungseinheit (20) auch mit einer oder mehreren Schnittstellen (11, 12, 30, 41, 42) verbunden sein, um Informationen anzuzeigen, zu übertragen und/oder zu empfangen. Die Schnittstellen können eine oder mehrere Kommunikationsschnittstellen (41, 42) und/oder eine oder mehrere Benutzerschnittstellen (11, 12, 30) umfassen. Die eine oder mehrere Kommunikationsschnittstellen (41, 42) können so konfiguriert sein, dass sie Informationen senden und/oder empfangen, z.B. zu und/oder von einer Kamera, anderen Computersystemen, Netzwerken, Datenspeichern oder dergleichen. Die eine oder mehrere Kommunikationsschnittstellen (41, 42) können so konfiguriert sein, dass sie Informationen über physische (verdrahtete) und/oder drahtlose Kommunikationsverbindungen übertragen und/oder empfangen. Die eine oder die mehreren Kommunikationsschnittstellen (41, 42) können eine oder mehrere Schnittstellen für die Verbindung mit einem Netzwerk enthalten, z.B. unter Verwendung von Technologien wie Mobiltelefon, Wi-Fi, Satellit, Kabel, DSL, Glasfaser und/oder dergleichen. In einigen Beispielen können die eine oder die mehreren Kommunikationsschnittstellen (41, 42) eine oder mehrere Nahbereichskommunikationsschnittstellen umfassen, die so konfiguriert sind, dass sie Geräte mit Nahbereichskommunikationstechnologien wie NFC, RFID, Bluetooth, Bluetooth LE, ZigBee, Infrarot (z. B. IrDA) oder Ähnlichem verbinden.

Die Benutzerschnittstellen (11, 12, 30) können eine Anzeige (30) umfassen. Eine Anzeige (30) kann so konfiguriert sein, dass sie einem Benutzer Informationen anzeigt. Geeignete Beispiele hierfür sind eine Flüssigkristallanzeige (LCD), eine Leuchtdiodenanzeige (LED), ein Plasmabildschirm (PDP) oder Ähnliches. Die Benutzereingabeschnittstelle(n) (11, 12) kann/können verdrahtet oder drahtlos sein und kann/können so konfiguriert sein, dass sie Informationen von einem Benutzer in das Computersystem (1) empfängt/empfangen, z.B. zur Verarbeitung, Speicherung und/oder Anzeige. Geeignete Beispiele für Benutzereingabeschnittstellen (11, 12) sind ein Mikrofon, ein Bild- oder Videoaufnahmegerät (z.B. eine Kamera), eine Tastatur oder ein Tastenfeld, ein Joystick, eine berührungsempfindliche Oberfläche (getrennt von einem Touchscreen oder darin integriert) oder ähnliches. In einigen Beispielen können die Benutzerschnittstellen eine automatische Identifikations- und Datenerfassungstechnologie (AIDC) für maschinenlesbare Informationen enthalten. Dazu können Barcodes, Radiofrequenz-Identifikation (RFID), Magnetstreifen, optische Zeichenerkennung (OCR), Karten mit integrierten Schaltkreisen (ICC) und ähnliches gehören. Die Benutzerschnittstellen können ferner eine oder mehrere Schnittstellen für die Kommunikation mit Peripheriegeräten wie Druckern und/oder Kameras und dergleichen umfassen.

Ein oder mehrere Computerprogramme (60) können im Speicher (50) gespeichert sein und von der Verarbeitungseinheit (20) ausgeführt werden, die dadurch programmiert wird, die in dieser Beschreibung beschriebenen Funktionen zu erfüllen. Das Abrufen, Laden und Ausführen von Anweisungen des Computerprogramms (60) kann sequenziell erfolgen, so dass jeweils ein Befehl abgerufen, geladen und ausgeführt wird. Das Abrufen, Laden und/oder Ausführen kann aber auch parallel erfolgen.

Die Vorrichtung kann ein Computersystem in Form eines Laptops, Notebooks, Netbooks und/der Tablet-PCs oder Smartphones sein oder ein solches umfassen; die Vorrichtung kann auch ein Bestandteil einer Kamera sein. Ebenso können eine oder mehrere Kameras Bestandteil(e) der Vorrichtung sein.

Die Vorrichtung kann eine Energieversorgungeinheit umfassen, mit der die Vorrichtung mit Energie versorgt werden kann.

Die Vorrichtung kann für einen autonomen Betrieb im Freien für einen Zeitraum von mehreren Tagen, Wochen, Monaten oder sogar Jahren hergerichtet. Die Mittel zur Energieversorgung können z.B. eine oder mehrere elektrochemischen Zellen, Akkumulatoren, Solarzellen, Brennstoffzellen und/oder Generatoren (z.B. in Kombination mit einem Windrad) umfassen.

In einer Ausführungsform umfasst die Vorrichtung eine oder mehrere Solarzellen und einen oder mehrere Akkumulatoren zur Energieversorgung. Die mindestens eine Solarzelle und der mindestens eine Akkumulator sind so miteinander verbunden, dass die Solarzelle den Akkumulator auflädt, wenn elektromagnetische Strahlung (z.B. Sonnenlicht) auf die mindestens eine Solarzelle trifft.

In einer Ausführungsform der vorliegenden Offenbarung umfasst die Vorrichtung eine Fangvorrichtung für Gliederfüßer oder spezifische Gliederfüßer. In einer Ausführungsform der vorliegenden Offenbarung umfasst die Fangvorrichtung den Sammelbereich. In einer Ausführungsform der vorliegenden Offenbarung umfasst die Vorrichtung eine oder mehrere Kameras. In einer Ausführungsform der vorliegenden Offenbarung umfasst die mindestens eine Kamera mindestens einen Kamerasensor auf den der Sammelbereich (z.B. durch eine Kameraoptik, die ein Bestandteil der Vorrichtung sein kann) abgebildet wird.

Die Vorrichtung der vorliegenden Offenbarung ist konfiguriert,
- eine erste Bildaufnahme bereitzustellen, wobei die erste Bildaufnahme einen Sammelbereich umfassend einen oder mehrere Gliederfüßer unter Bestrahlung mit elektromagnetischer Strahlung einer ersten Art repräsentiert,
- eine zweite Bildaufnahme bereitzustellen, wobei die zweite Bildaufnahme den Sammelbereich umfassend den einen oder die mehreren Gliederfüßer unter Bestrahlung mit elektromagnetischer Strahlung einer zweiten Art repräsentiert, wobei die zweite Art verschieden von der ersten Art ist,
- den einen oder die mehreren Gliederfüßer auf Basis der ersten Bildaufnahme und der zweiten Bildaufnahme zu identifizieren,
- eine Information über den einen oder die mehreren identifizierten Gliederfüßer auszugeben.

Zur Abbildung des Sammelbereichs auf einem oder mehreren Bildsensoren einer oder mehrerer Kameras ist eine Beleuchtungseinheit erforderlich, mit der der Sammelbereich beleuchtet wird, so dass elektromagnetische Strahlung im infraroten, sichtbaren und/oder ultravioletten Bereich des Spektrums vom beleuchteten Sammelbereich in Richtung Kamera gestreut/reflektiert/gebeugt wird. Hierzu können eine oder mehrere Beleuchtungseinheiten verwendet werden, die für eine definierte, vom Tageslicht unabhängige Beleuchtung sorgt. Diese mindestens eine Beleuchtungseinheit ist vorzugsweise seitlich neben der mindestens einen Kamera angebracht, so dass es zu keinem Schattenwurf der Kamera auf den Sammelbereich kommt.

Die mindestens eine Beleuchtungseinheit kann ein Bestandteil der Kamera und/oder der Vorrichtung sein. Es denkbar, dass mehrere Beleuchtungsquellen den Sammelbereich aus unterschiedlichen Richtungen beleuchten.

Die Vorrichtung kann eine Sendeeinheit umfassen, um Informationen über ein Netzwerk an ein separates Computersystem zu übermitteln. Diese Informationen können beispielsweise Bildaufnahmen des Sammelbereichs sein. Diese Informationen können Ergebnisse einer Analyse einer Bildaufnahme sein, zum Beispiel die Zahl der in einer Bildaufnahme abgebildeten Gliederfüßer, identifizierte Gliederfüßer und/oder Mitteilungen zum Status der Vorrichtung.

Die Sendeeinheit kann so ausgestaltet sein, dass sie Informationen über ein Mobilfunknetz (z.B. GSM: *Global System for Mobile Communications,* GPRS: *General Packet Radio Service;* UMTS: *Universal Mobile Telecommunications System,* LTE: *Long Term Evolution*), über ein WLAN (*Wireless Local Artea Network*), über Bluetooth, über DECT (*Digital Enhanced Cordless Telecommunications*) über ein Low-Power-Wide-Area-Netzwerk (*Low Power Wide Area Network* (LPWAN oder LPN)) wie beispielsweise ein NarrowBand IoT Netzwerk und/oder über eine Kombination aus verschiedenen Übertragungswegen übermittelt.

Die Sendeeinheit kann so ausgestaltet sein, dass sie Informationen über eine kurzreichweitige Funkverbindung (z.B. Bluetooth) an eine Basisstation übermittelt, von der die Informationen dann kabelgebunden und/oder über eine langreichweitige Funkverbindung (z.B. ein Mobilfunknetz) weitergeleitet werden.

In einer Ausführungsform der vorliegenden Offenbarung umfasst die Sendeeinheit ein Modem und eine Antenne zum Versenden von Informationen über ein GSM-, GPRS-, 2G-, 3G-, LTE-, 4G-, 5G-, 6G-Mobilfunknetzwerk oder über ein anderes Mobilfunknetzwerk.

Gegenstand der vorliegenden Erfindung ist auch ein Computerprogramm. Ein solches Computerprogramm kann auf einem nichtflüchtigen Datenträger wie beispielsweise einer CD, einer DVD, einem USB-Stick oder einem anderen Medium zum Speichern von Daten gespeichert sein.

Das Computerprogramm kann in einem App-Store und/oder auf einer Webseite des Internets zum Herunterladen angeboten werden.

Das Computerprogramm kann in den Speicher der Vorrichtung der vorliegenden Offenbarung geladen werden und/oder dort bereits gespeichert sein und die Vorrichtung dazu veranlassen, folgende Schritte ausführen:
- Bereitstellen einer ersten Bildaufnahme, wobei die erste Bildaufnahme einen Sammelbereich umfassend einen oder mehrere Gliederfüßer unter Bestrahlung mit elektromagnetischer Strahlung einer ersten Art repräsentiert,
- Bereitstellen einer zweiten Bildaufnahme, wobei die zweite Bildaufnahme den Sammelbereich umfassend den einen oder die mehreren Gliederfüßer unter Bestrahlung mit elektromagnetischer Strahlung einer zweiten Art repräsentiert, wobei die zweite Art verschieden von der ersten Art ist,
- Identifizieren des einen oder der mehreren Gliederfüßer auf Basis der ersten Bildaufnahme und der zweiten Bildaufnahme,
- Ausgeben einer Information über den einen oder die mehreren identifizierten Gliederfüßer.

Weitere Ausführungsformen der vorliegenden Offenbarung sind:
1. Ein Computer-implementiertes Verfahren umfassend:
   - Bereitstellen einer ersten Bildaufnahme, wobei die erste Bildaufnahme einen Sammelbereich umfassend einen oder mehrere Gliederfüßer unter Bestrahlung mit elektromagnetischer Strahlung einer ersten Art repräsentiert,
   - Bereitstellen einer zweiten Bildaufnahme, wobei die zweite Bildaufnahme den Sammelbereich umfassend den einen oder die mehreren Gliederfüßer unter Bestrahlung mit elektromagnetischer Strahlung einer zweiten Art repräsentiert, wobei die zweite Art verschieden von der ersten Art ist,
   - Identifizieren des einen oder der mehreren Gliederfüßer auf Basis der ersten Bildaufnahme und der zweiten Bildaufnahme,
   - Ausgeben einer Information über den einen oder die mehreren identifizierten Gliederfüßer.
2. Das Computer-implementierte Verfahren gemäß Ausführungsform 1, wobei die erste Art einen ersten Spektralbereich spezifiziert und die zweite Art einen zweiten Spektralbereich spezifiziert.
3. Das Computer-implementierte Verfahren gemäß Ausführungsform 2, wobei der erste Spektralbereich eine Mehrzahl von Wellenlängen im sichtbaren Spektralbereich umfasst, wobei der zweite Spektralbereich eine oder mehrere Wellenlängen im ultravioletten und/oder infraroten Spektralbereich umfasst.
4. Das Computer-implementierte Verfahren gemäß einer der Ausführungsformen 1 bis 3, wobei die erste Art eine erste Polarisation spezifiziert und die zweite Art eine zweite Polarisation spezifiziert.
5. Das Computer-implementierte Verfahren gemäß Ausführungsform 4, wobei die erste Polarisation angibt, dass die elektromagnetische Strahlung der ersten Art nicht-polarisiert ist, wobei die zweite Polarisation angibt, dass die elektromagnetische Strahlung der zweiten Art polarisiert ist und/oder wie die elektromagnetische Strahlung der zweiten Art polarisiert ist.
6. Das Computer-implementierte Verfahren gemäß einer der Ausführungsformen 1 bis 5, wobei die erste Art eine erste Intensitätsverteilung repräsentiert und die zweite Art eine zweite Intensitätsverteilung repräsentiert.
7. Das Computer-implementierte Verfahren gemäß einer der Ausführungsformen 1 bis 6, wobei die zweite Bildaufnahme den Sammelbereich in einem zeitlichen Abstand zur ersten Bildaufnahme zeigt.
8. Das Computer-implementierte Verfahren gemäß Ausführungsform 7, wobei der zeitliche Abstand weniger als eine Minute oder weniger als 20 Sekunden oder weniger als 10 Sekunden oder weniger als 5 Sekunden oder weniger als 3 Sekunden oder weniger als 2 Sekunden oder weniger als 1 Sekunde beträgt.
9. Das Computer-implementierte Verfahren gemäß einer der Ausführungsformen 1 bis 8, wobei das Identifizieren des einen oder der mehreren Gliederfüßer ein Zuordnen des einen oder der mehreren Gliederfüßer zu einer Unterklasse, Überordnung, Ordnung, Unterordnung, Familie, Gattung und/oder Art bedeutet oder umfasst.
10. Das Computer-implementierte Verfahren gemäß einer der Ausführungsformen 1 bis 9, wobei das Identifizieren des einen oder der mehreren Gliederfüßer eine Zuordnung zu einer der Klassen Nützling oder Schädling bedeutet und/oder umfasst.
11. Das Computer-implementierte Verfahren gemäß einer der Ausführungsformen 1 bis 10, wobei das Identifizieren des einen oder der mehreren Gliederfüßer umfasst:
   - Zuführen der ersten Bildaufnahme und der zweiten Bildaufnahme einem trainierten Modell des maschinellen Lernens, wobei das Modell des maschinellen Lernens konfiguriert ist und auf Basis von Trainingsdaten trainiert wurde, wobei die Trainingsdaten eine Vielzahl an Paaren einer ersten und einer zweiten Referenz-Bildaufnahmen als Eingabedaten und für jedes Paar eine Information über die Identität von einem oder mehreren in den Referenz-Bildaufnahmen abgebildeten Gliederfüßern als Zieldaten umfasst,
   - Empfangen einer Information über die Identität des einen oder der mehreren Gliederfüßer als Ausgabe von dem trainierten Modell des maschinellen Lernens.
12. Das Computer-implementierte Verfahren gemäß einer der Ausführungsformen 1 bis 11, wobei das Identifizieren des einen oder der mehreren Gliederfüßer umfasst:
   - Zuführen der ersten Bildaufnahme einem trainierten ersten Modell des maschinellen Lernens, wobei das erste Modell des maschinellen Lernens konfiguriert ist und auf Basis von Trainingsdaten trainiert wurde, wobei die Trainingsdaten eine Vielzahl von ersten Referenz-Bildaufnahmen als Eingabedaten und für jede erste Referenz-Bildaufnahme eine Information über ein Vorhandensein eines Gliederfüßers in der ersten Referenz-Bildaufnahme als Zieldaten umfasst,
   - Empfangen einer Information über ein Vorhandensein des einen oder der mehreren Gliederfüßer in der ersten Bildaufnahme als Ausgabe von dem trainierten ersten Modell des maschinellen Lernens,
   - Zuführen der zweiten Bildaufnahme und/oder eines Ausschnitts der zweiten Bildaufnahme umfassend einen vorhandenen Gliederfüßer einem trainierten zweiten Modell des maschinellen Lernens, wobei das zweite Modell des maschinellen Lernens konfiguriert ist und auf Basis von Trainingsdaten trainiert wurde, wobei die Trainingsdaten eine Vielzahl an zweiten Referenz-Bildaufnahmen umfassend einen oder mehrere Gliederfüßer als Eingabedaten und für jede zweite Referenz-Information eine Information über die Identität des einen oder der mehreren in der zweiten Referenz-Bildaufnahmen abgebildeten Gliederfüßern als Zieldaten umfasst,
   - Empfangen einer Information über die Identität des vorhandenen Gliederfüßers als Ausgabe von dem trainierten zweiten Modell des maschinellen Lernens.
13. Das Computer-implementierte Verfahren gemäß einer der Ausführungsformen 1 bis 12, wobei das Identifizieren des einen oder der mehreren Gliederfüßer umfasst:
   - Zuführen der ersten Bildaufnahme einem trainierten ersten Modell des maschinellen Lernens, wobei das erste Modell des maschinellen Lernens konfiguriert ist und auf Basis von Trainingsdaten trainiert wurde, wobei die Trainingsdaten eine Vielzahl von ersten Referenz-Bildaufnahmen als Eingabedaten und für jede erste Referenz-Bildaufnahme eine erste Information über die Identität von einem oder mehreren in der Referenz-Bildaufnahme abgebildeten Gliederfüßern als Zieldaten umfasst,
   - Empfangen einer ersten Information über die Identität des einen oder der mehreren Gliederfüßer als Ausgabe von dem trainierten ersten Modell des maschinellen Lernens,
   - Auswählen eines trainieren zweiten Modells des maschinellen Lernens auf Basis der ersten Information,
   - Zuführen der zweiten Bildaufnahme oder eines Ausschnitts der zweiten Bildaufnahme umfassend einen Gliederfüßer dem zweiten Modell des maschinellen Lernens, wobei das zweite Modell des maschinellen Lernens konfiguriert ist und auf Basis von Trainingsdaten trainiert wurde, wobei die Trainingsdaten eine Vielzahl von zweiten Referenz-Bildaufnahmen als Eingabedaten und für jede zweite Referenz-Bildaufnahme eine zweite Information über die Identität von einem in der zweiten Referenz-Bildaufnahme abgebildeten Gliederfüßer als Zieldaten umfasst,
   - Empfangen einer zweiten Information über die Identität des einen oder der mehreren Gliederfüßer als Ausgabe von dem trainierten zweiten Modell des maschinellen Lernens.
14. Das Computer-implementierte Verfahren gemäß einer der Ausführungsformen 1 bis 13, wobei das Identifizieren des einen oder der mehreren Gliederfüßer umfasst:
   - Zuführen der ersten Bildaufnahme einem trainierten ersten Modell des maschinellen Lernens, wobei das erste Modell des maschinellen Lernens konfiguriert ist und auf Basis von Trainingsdaten trainiert wurde, wobei die Trainingsdaten eine Vielzahl von ersten Referenz-Bildaufnahmen als Eingabedaten und für jede erste Referenz-Bildaufnahme eine erste Information über die Identität von einem oder mehreren in der ersten Referenz-Bildaufnahme abgebildeten Gliederfüßern als Zieldaten umfasst,
   - Empfangen einer ersten Information über die Identität des einen oder der mehreren Gliederfüßer als Ausgabe von dem trainierten ersten Modell des maschinellen Lernens,
   - Ermitteln der zweiten Art auf Basis der ersten Information,
   - Erzeugen der zweiten Bildaufnahme,
   - Zuführen der zweiten Bildaufnahme oder eines Ausschnitts der zweiten Bildaufnahme umfassend einen Gliederfüßer einem trainierten zweiten Modell des maschinellen Lernens, wobei das zweite Modell des maschinellen Lernens konfiguriert ist und auf Basis von Trainingsdaten trainiert wurde, wobei die Trainingsdaten eine Vielzahl von zweiten Referenz-Bildaufnahmen als Eingabedaten und für jede zweite Referenz-Bildaufnahme eine zweite Information über die Identität von einem in der zweiten Referenz-Bildaufnahme abgebildeten Gliederfüßer als Zieldaten umfasst,
   - Empfangen einer zweiten Information über die Identität des einen oder der mehreren Gliederfüßer als Ausgabe von dem trainierten zweiten Modell des maschinellen Lernens.
15. Das Computer-implementierte Verfahren gemäß einer der Ausführungsformen 1 bis 14, wobei das Bereitstellen der ersten Bildaufnahme umfasst:
   - Erzeugen der ersten Bildaufnahme mittels einer oder mehrerer Kameras,
   wobei das Bereitstellen der zweiten Bildaufnahme umfasst:
   - Erzeugen der zweiten Bildaufnahme mittels einer oder mehrerer Kameras.
16. Das Computer-implementierte Verfahren gemäß einer der Ausführungsformen 1 bis 15, wobei das Bereitstellen der ersten Bildaufnahme umfasst:
   - Empfangen der ersten Bildaufnahme von einer Kamera oder einem separaten Computersystem oder Auslesen der ersten Bildaufnahme aus einem Datenspeicher
   wobei das Bereitstellen der zweiten Bildaufnahme umfasst:
   - Empfangen der zweiten Bildaufnahme von einer Kamera oder einem separaten Computersystem oder Auslesen der zweiten Bildaufnahme aus einem Datenspeicher
17. Eine Vorrichtung umfassend eine Verarbeitungseinheit und einen Speicher, wobei in dem Speicher ein Computerprogramm gespeichert ist, das die Vorrichtung veranlasst das Computer-implementierte Verfahren gemäß einer der Ausfiihrungsformen 1 bis 16 auszuführen.
18. Die Vorrichtung gemäß Ausführungsform 17, ferner umfassend eine oder mehrere Kameras zum Erzeugen der ersten und/oder der zweiten Bildaufnahme.
19. Die Vorrichtung gemäß einer der Ausfiihrungsformen 17 oder 18, ferner umfassend eine oder mehrere Beleuchtungseinheiten zum Bestrahlen des Sammelbereichs mit elektromagnetischer Strahlung der ersten Art und/oder der zweiten Art.
20. Die Vorrichtung gemäß einer der Ausfiihrungsformen 17 bis 19, wobei die eine oder mehreren Beleuchtungseinheiten eine oder mehrere lichtemittierende Dioden umfassen.
21. Die Vorrichtung gemäß Ausfuhrungsform 20, wobei die eine oder mehreren Beleuchtungseinheiten eine oder mehrere Blitz-LEDs umfassen
22. Die Vorrichtung gemäß einer der Ausführungsformen 20 oder 21, wobei mindestens eine Beleuchtungseinheit weißes Licht erzeugt und mindestens eine andere Beleuchtungseinheit infrarotes oder ultraviolettes Licht erzeugt.
23. Die Vorrichtung gemäß einer der Ausfiihrungsformen 17 bis 22, ferner umfassend einen Polarisator zwischen einer Beleuchtungseinheit und dem Sammelbereich.
24. Die Vorrichtung gemäß einer der Ausfiihrungsformen 17 bis 23, ferner umfassend einen Polarisator zwischen dem Sammelbereich und einem Kamerasensor.
25. Die Vorrichtung gemäß einer der Ausführungsformen 17 bis 24, ferner umfassend den Sammelbereich.
26. Die Vorrichtung gemäß einer der Ausfiihrungsformen 17 bis 25, wobei der Sammelbereich ein Bestandteil einer Fangvorrichtung für Gliederfüßer ist.
27. Die Vorrichtung gemäß einer der Ausführungsformen 17 bis 26, wobei der Sammelbereich eine ebene Oberfläche einer Tafel oder Karte ist, die optional mit einem Klebemittel versehen ist.
28. Die Vorrichtung gemäß einer der Ausführungsformen 17 bis 27, wobei der Sammelbereich ein Boden eines mit einer Flüssigkeit gefüllten Behälters oder eine Flüssigkeit in einem Behälter ist.
29. Ein Nicht-flüchtiges computerlesbares Speichermedium, auf dem ein Computerprogramm gespeichert ist, das, wenn es von einer Verarbeitungseinheit eines Computersystems ausgeführt werden, das Computersystem veranlasst das Computer-implementierte Verfahren gemäß einer der Ausführungsformen 1 bis 16 auszuführen.

## Patentansprüche

1. Computer-implementiertes Verfahren umfassend:
- Bereitstellen einer ersten Bildaufnahme, wobei die erste Bildaufnahme einen Sammelbereich umfassend einen oder mehrere Gliederfüßer unter Bestrahlung mit elektromagnetischer Strahlung einer ersten Art repräsentiert,
- Bereitstellen einer zweiten Bildaufnahme, wobei die zweite Bildaufnahme den Sammelbereich umfassend den einen oder die mehreren Gliederfüßer unter Bestrahlung mit elektromagnetischer Strahlung einer zweiten Art repräsentiert, wobei die zweite Art verschieden von der ersten Art ist,
- Identifizieren des einen oder der mehreren Gliederfüßer auf Basis der ersten Bildaufnahme und der zweiten Bildaufnahme,
- Ausgeben einer Information über den einen oder die mehreren identifizierten Gliederfüßer.

2. Computer-implementiertes Verfahren gemäß Anspruch 1, wobei die erste Art einen ersten Spektralbereich spezifiziert und die zweite Art einen zweiten Spektralbereich spezifiziert.

3. Computer-implementiertes Verfahren gemäß Anspruch 2, wobei der erste Spektralbereich eine Mehrzahl von Wellenlängen im sichtbaren Spektralbereich umfasst, wobei der zweite Spektralbereich eine oder mehrere Wellenlängen im ultravioletten und/oder infraroten Spektralbereich umfasst.

4. Computer-implementiertes Verfahren gemäß einem der Ansprüche 1 bis 3, wobei die erste Art eine erste Polarisation spezifiziert und die zweite Art eine zweite Polarisation spezifiziert.

5. Computer-implementiertes Verfahren gemäß Anspruch 4, wobei die erste Polarisation angibt, dass die elektromagnetische Strahlung der ersten Art nicht-polarisiert ist, wobei die zweite Polarisation angibt, dass die elektromagnetische Strahlung der zweiten Art polarisiert ist und/oder wie die elektromagnetische Strahlung der zweiten Art polarisiert ist.

6. Computer-implementiertes Verfahren gemäß einem der Ansprüche 1 bis 5, wobei die erste Art eine erste Intensitätsverteilung repräsentiert und die zweite Art eine zweite Intensitätsverteilung repräsentiert.

7. Computer-implementiertes Verfahren gemäß einem der Ansprüche 1 bis 6, wobei die zweite Bildaufnahme den Sammelbereich in einem zeitlichen Abstand zur ersten Bildaufnahme zeigt, wobei der zeitliche Abstand weniger als eine Minute oder weniger als 20 Sekunden oder weniger als 10 Sekunden oder weniger als 5 Sekunden oder weniger als 3 Sekunden oder weniger als 2 Sekunden oder weniger als 1 Sekunde beträgt.

8. Computer-implementiertes Verfahren gemäß einem der Ansprüche 1 bis 7, wobei das Identifizieren des einen oder der mehreren Gliederfüßer umfasst:
- Zuführen der ersten Bildaufnahme und der zweiten Bildaufnahme einem trainierten Modell des maschinellen Lernens, wobei das Modell des maschinellen Lernens konfiguriert ist und auf Basis von Trainingsdaten trainiert wurde, wobei die Trainingsdaten eine Vielzahl an Paaren einer ersten und einer zweiten Referenz-Bildaufnahmen als Eingabedaten und für jedes Paar eine Information über die Identität von einem oder mehreren in den Referenz-Bildaufnahmen abgebildeten Gliederfüßern als Zieldaten umfasst,
- Empfangen einer Information über die Identität des einen oder der mehreren Gliederfüßer als Ausgabe von dem trainierten Modell des maschinellen Lernens.

9. Computer-implementiertes Verfahren gemäß einem der Ansprüche 1 bis 8, wobei das Identifizieren des einen oder der mehreren Gliederfüßer umfasst:
- Zuführen der ersten Bildaufnahme einem trainierten ersten Modell des maschinellen Lernens, wobei das erste Modell des maschinellen Lernens konfiguriert ist und auf Basis von Trainingsdaten trainiert wurde, wobei die Trainingsdaten eine Vielzahl von ersten Referenz-Bildaufnahmen als Eingabedaten und für jede erste Referenz-Bildaufnahme eine Information über ein Vorhandensein eines Gliederfüßers in der ersten Referenz-Bildaufnahme als Zieldaten umfasst,
- Empfangen einer Information über ein Vorhandensein des einen oder der mehreren Gliederfüßer in der ersten Bildaufnahme als Ausgabe von dem trainierten ersten Modell des maschinellen Lernens,
- Zuführen der zweiten Bildaufnahme und/oder eines Ausschnitts der zweiten Bildaufnahme umfassend einen vorhandenen Gliederfüßer einem trainierten zweiten Modell des maschinellen Lernens, wobei das zweite Modell des maschinellen Lernens konfiguriert ist und auf Basis von Trainingsdaten trainiert wurde, wobei die Trainingsdaten eine Vielzahl an zweiten Referenz-Bildaufnahmen umfassend einen oder mehrere Gliederfüßer als Eingabedaten und für jede zweite Referenz-Information eine Information über die Identität des einen oder der mehreren in der zweiten Referenz-Bildaufnahmen abgebildeten Gliederfüßern als Zieldaten umfasst,
- Empfangen einer Information über die Identität des vorhandenen Gliederfüßers als Ausgabe von dem trainierten zweiten Modell des maschinellen Lernens.

10. Computer-implementiertes Verfahren gemäß einem der Ansprüche 1 bis 9, wobei das Identifizieren des einen oder der mehreren Gliederfüßer umfasst:
- Zuführen der ersten Bildaufnahme einem trainierten ersten Modell des maschinellen Lernens, wobei das erste Modell des maschinellen Lernens konfiguriert ist und auf Basis von Trainingsdaten trainiert wurde, wobei die Trainingsdaten eine Vielzahl von ersten Referenz-Bildaufnahmen als Eingabedaten und für jede erste Referenz-Bildaufnahme eine erste Information über die Identität von einem oder mehreren in der Referenz-Bildaufnahme abgebildeten Gliederfüßern als Zieldaten umfasst,
- Empfangen einer ersten Information über die Identität des einen oder der mehreren Gliederfüßer in der ersten Bildaufnahme als Ausgabe von dem trainierten ersten Modell des maschinellen Lernens,
- Auswählen eines trainieren zweiten Modells des maschinellen Lernens auf Basis der ersten Information,
- Zuführen der zweiten Bildaufnahme oder eines Ausschnitts der zweiten Bildaufnahme umfassend einen Gliederfüßer dem zweiten Modell des maschinellen Lernens, wobei das zweite Modell des maschinellen Lernens konfiguriert ist und auf Basis von Trainingsdaten trainiert wurde, wobei die Trainingsdaten eine Vielzahl von zweiten Referenz-Bildaufnahmen als Eingabedaten und für jede zweite Referenz-Bildaufnahme eine zweite Information über die Identität von einem in der zweiten Referenz-Bildaufnahme abgebildeten Gliederfüßer als Zieldaten umfasst,
- Empfangen einer zweiten Information über die Identität des in der zweiten Bildaufnahme abgebildeten Gliederfüßers als Ausgabe von dem trainierten zweiten Modell des maschinellen Lernens.

11. Computer-implementiertes Verfahren gemäß einem der Ansprüche 1 bis 10, wobei das Identifizieren des einen oder der mehreren Gliederfüßer umfasst:
- Zuführen der ersten Bildaufnahme einem trainierten ersten Modell des maschinellen Lernens, wobei das erste Modell des maschinellen Lernens konfiguriert ist und auf Basis von Trainingsdaten trainiert wurde, wobei die Trainingsdaten eine Vielzahl von ersten Referenz-Bildaufnahmen als Eingabedaten und für jede erste Referenz-Bildaufnahme eine erste Information über die Identität von einem oder mehreren in der ersten Referenz-Bildaufnahme abgebildeten Gliederfüßern als Zieldaten umfasst,
- Empfangen einer ersten Information über die Identität des einen oder der mehreren Gliederfüßer in der ersten Bildaufnahme als Ausgabe von dem trainierten ersten Modell des maschinellen Lernens,
- Ermitteln der zweiten Art der elektromagnetischen Strahlung auf Basis der ersten Information,
- Erzeugen der zweiten Bildaufnahme,
- Zuführen der zweiten Bildaufnahme oder eines Ausschnitts der zweiten Bildaufnahme umfassend einen Gliederfüßer einem trainierten zweiten Modell des maschinellen Lernens, wobei das zweite Modell des maschinellen Lernens konfiguriert ist und auf Basis von Trainingsdaten trainiert wurde, wobei die Trainingsdaten eine Vielzahl von zweiten Referenz-Bildaufnahmen als Eingabedaten und für jede zweite Referenz-Bildaufnahme eine zweite Information über die Identität von einem in der zweiten Referenz-Bildaufnahme abgebildeten Gliederfüßer als Zieldaten umfasst,
- Empfangen einer zweiten Information über die Identität des in der zweiten Bildaufnahme abgebildeten Gliederfüßers als Ausgabe von dem trainierten zweiten Modell des maschinellen Lernens.

12. Vorrichtung umfassend eine Verarbeitungseinheit und einen Speicher, wobei in dem Speicher ein Computerprogramm gespeichert ist, das die Vorrichtung veranlasst das Computer-implementierte Verfahren gemäß einem der Ansprüche 1 bis 11 auszuführen.

13. Vorrichtung gemäß Anspruch 12, ferner umfassend eine oder mehrere Kameras zum Erzeugen der ersten und/oder der zweiten Bildaufnahme.

14. Vorrichtung gemäß einem der Ansprüche 12 oder 13, ferner umfassend eine oder mehrere Beleuchtungseinheiten zum Bestrahlen des Sammelbereichs mit elektromagnetischer Strahlung der ersten Art und/oder der zweiten Art.

15. Vorrichtung gemäß Anspruch 14, wobei mindestens eine Beleuchtungseinheit weißes Licht erzeugt und mindestens eine andere Beleuchtungseinheit infrarotes oder ultraviolettes Licht erzeugt.

16. Vorrichtung gemäß einem der Ansprüche 12 bis 15, ferner umfassend einen Polarisator zwischen einer Beleuchtungseinheit und dem Sammelbereich und/oder einen Polarisator zwischen dem Sammelbereich und einem Kamerasensor.

17. Nicht-flüchtiges computerlesbares Speichermedium, auf dem ein Computerprogramm gespeichert ist, das, wenn es von einer Verarbeitungseinheit eines Computersystems ausgeführt werden, das Computersystem veranlasst das Computer-implementierte Verfahren gemäß einem der Ansprüche 1 bis 11 auszuführen.
